# EUROPÄISCHE PATENTSCHRIFT

(11) **EP 1 423 900 B1**
(45) Veröffentlichungstag und Bekanntmachung des Hinweises auf die Patenterteilung: **13.08.2014**
(21) Anmeldenummer: 02747229.9
(22) Anmeldetag: 20.06.2002
(51) Int. Cl.: H02K 5/20, H02K 5/18

(54) **ELEKTRISCHE MASCHINE, INSBESONDERE GENERATOR FÜR KRAFTFAHRZEUGE**
ELECTRIC MACHINE, ESPECIALLY A GENERATOR FOR MOTOR VEHICLES
MACHINE ELECTRIQUE, NOTAMMENT GENERATRICE POUR VEHICULES AUTOMOBILES

(30) Priorität: 25.08.2001 DE 10141693
(43) Veröffentlichungstag der Anmeldung: 02.06.2004
(73) Patentinhaber: ROBERT BOSCH GMBH, 70442 Stuttgart (DE)
(72) Erfinder: VLEMMINGS, Johannes, 71263 Weil der Stadt (DE); SCHMITT, Manfred, 64646 Heppenheim (DE); MANN, Karsten, 70469 Stuttgart (DE); KAEFER, Oliver, 71711 Murr (DE)
(86) Internationale Anmeldenummer: PCT/DE2002/002250
(87) Internationale Veröffentlichungsnummer: WO 2003/019750

(56) Entgegenhaltungen:
- EP-A- 0 585 644
- DE-A- 19 624 519
- NL-A- 8 204 663

## Beschreibung

### Stand der Technik

Die Erfindung geht aus von einer elektrischen Maschine, insbesondere einem Generator für Kraftfahrzeuge, nach dem Oberbegriff des Anspruchs 1.

Bei einem bekannten, wassergekühlten Generator für Kraftfahrzeuge (FR 2 717 638 A1) sind Stator und Rotor in einem topfförmigen Gehäuse aufgenommen, der einerseits so in eine topfförmigen Umhüllung eingesetzt ist, daß zwischen dem Mantel der topfförmigen Umhüllung und der Außenfläche des Gehäuses ein Ringraum verbleibt, der einerseits vom Boden der Umhüllung und andererseits von einem auf dem Topfrand von Umhüllung und Gehäuse aufgesetzten Deckel flüssigkeitsdicht abgedeckt ist. Der Ringraum weist an voneinander abgekehrten Seiten eine Zuflußöffnung und eine Abflußöffnung auf, die jeweils von einem an der Umhüllung radial abstehenden Anschlußstutzen für eine Wasserleitung umschlossen sind. Das mittels einer Pumpe in einem Kreislauf umgewälzte Wasser tritt durch die Zuflußöffnung in den Ringraum ein, umströmt das Gehäuse und tritt über die Abflußöffnung wieder aus dem Ringraum aus. Die vom Generator abgegebene Wärme wird vom kühleren Wasser aufgenommen und abgeführt. Das Dokument DE 19 624 519 offenbart ein gerät gemäss dem Oberbegriff des Anspruchs 1.

### Vorteile der Erfindung

Die erfindungsgemäße elektrische Maschine hat den Vorteil, daß infolge der mittels der Leitstege erzwungenen Führung des Kühlmittels eine gleichmäßige Umströmung des Gehäuses der elektrischen Maschine durch das Kühlmittel sichergestellt ist, so daß - anders als beim Stand der Technik - die Ausbildung von sog. "Hot-Spots" aufgrund von lokal unzureichender Strömungsgeschwindigkeit des Kühlmittel, z.B. durch Entstehen von Rezirkulationsblasen, verhindert wird. Durch die Vielzahl der Leitstege, die zugleich als Kühlrippen wirken, vergrößert sich die zur Wärmeübertragung auf das Kühlmittel zur Verfügung stehende Oberfläche des Gehäuses, so daß für eine gleiche Kühlleistung der Volumenstrom des Kühlmittels um den Faktor vermindert werden kann, um den die Gehäuseoberfläche vergrößert wird. Durch die beitbandige, axiale Strömung des Kühlmittels, die jeweils an den Endseiten des Ringraums umgelenkt wird, ist dort, wo der Stator der Maschine durch das metallische Gehäuse hindurch einen großen Wärmeeintrag liefert, auch die Oberfläche zur Wärmeübertragung und die Strömungsgeschwindigkeit des Kühlmittels groß, so daß die lokale Kühlleistung gut an den lokalen Wärmeeintrag angepaßt ist. Ggf. können hierfür auch die Abstände der Leitstege entsprechend dimensoniert werden. Kurzschlußverluste durch Leckströme über die Leitstege hinweg sind gering, da sich wegen der strömungsgünstigen Anordnung keine großen Druckdifferenzen über den zwischen Mantel und der Außenfläche der Leitstege vorhanden kleinen Spalte ergeben.

Insgesamt wird bei der erfindungsgemäßen Maschine in allen Raumsegmenten eine ausreichen große Kühlleistung zur Wärmeabfuhr erbracht, und zwar auch für die Fälle, in denen nur noch ein eingeschränkter Volumenstrom des Kühlmittels zur Verfügung steht.

Durch die in den weiteren Ansprüchen aufgeführten Maßnahmen sind vorteilhafte Weiterbildungen und Verbesserungen der im Anspruch 1 angegebenen elektrischen Maschine möglich.

Gemäß einer bevorzugten Ausführungsform der Erfindung bilden die Leitstege in jedem Raumsegment eine Vielzahl von parallelen Strömungskanälen mit jeweils einem Ein- und Ausströmende. Im Ringraum sind an jedem Ende der Strömungskanäle in Umfangsrichtung sich erstreckende Kühlmittelsammelabschnitte ausgebildet, von denen sich jeweils ein Einströmsammelabschnitt über die Einströmenden und ein Ausströmsammelabschnitt über die Ausströmenden eines jeden Raumsegments erstreckt. An jedem Ende der Strömungskanäle schließt sich in Umfangsrichtung an den Ausströmsammelabschnitt des einen Raumsegments ein Einströsammelabschnitt des folgenden Raumsegments an, wobei jeder Einströmsammelabschnitt von dem Ausströmsammelabschnitt des in Strömungsrichtung folgenden Raumsegments abgetrennt ist. Durch diese parallele Anordnung der Leitstege in wenigen, z.B. fünf, über den Umfang des Gehäuses verteilten Raumsegmenten vermindert sich die Länge des Kühlkanals und der Strömungswiderstand.

Gemäß einer vorteilhaften Ausführungsform der Erfindung sind die Kühlmittelsammelabschnitte so ausgebildet, daß der Querschnitt der Einströmsammelabschnitte in Strömungrichtung abnimmt und der Querschnitt der Ausströmsammelabschnitte in Strömungsrichtung zunimmt. Durch diese konstruktive Ausbildung wird die Strömungsgeschwindigkeit im Bereich der Umlenkung der Kühlmittelströmung herabgesetzt und eine gleichmäßige Kühlmittelverteilung auf die parallelen Strömungskanäle bei gleicher Strömungsgeschwindigkeit in den Strömungskanälen bewirkt.

Gemäß einer vorteilhaften Ausführungsform der Erfindung sind die Kühlmittelsammelabschnitte an den Enden der Strömungskanäle dadurch gebildet, daß die Leitstege eine gleiche Länge aufweisen und daß innerhalb eines Raumsegments in Umfangsrichtung aufeinanderfolgende Leitstege axial - um vorzugsweise gleiche Beträge - in die gleiche Richtung gegeneinander verschoben sind. Dabei ist der im Raumsegment letzte Leitsteg soweit verschoben, daß er mit einem Stegende bis an einen von zwei den Ringraum stirnseitig abschließenden Ringstegen herangeführt ist. Durch diese konstruktive Ausführung wird die gewünschte Querschnittsabnahme bzw. -zunahme in den Kühlmittelsammelabschnitten und die Trennung der Einströmsammelabschnitte von den Ausströmsammelabschnitten im folgenden Raumsegment fertigungstechnisch vorteilhaft realisiert.

Gemäß einer vorteilhaften Ausführungsform der Erfindung ist zwischen dem ersten Leitsteg des in Strömungsrichtung ersten Raumsegments und dem letzten Leitsteg des letzten Raumsegments ein mit dem Kühlmittelzufluß in Verbindung stehender, in axialer Richtung sich erstreckender Zuflußkanal und ein mit dem Kühlmittelabfluß in Verbindung stehender, in Umfangsrichtung sich erstreckender Abflußkanal ausgebildet. Zu- und Abflußkanal sind durch einen in Umfangsrichtung von dem vorderen Ende des letzten Leitstegs im letzten Raumsegment bis zu dem ersten Leitsteg in dem ersten Raumsegment sich erstreckenden Trennsteg voneinander getrennt. Dabei ist ein auf dem Mantel aufgesetzter Zuflußstutzen für den Kühlmittelzufluß mit seiner Achse so ausgerichtet, daß diese mit der axialen Strömungsrichtung des Kühlmittels im Zuflußkanal einen stumpfen Winkel einschließt, und ein auf den Mantel aufgesetzter Abflußstutzen für den Kühlmittelabfluß so ausgeführt, daß dessen Achse mit der etwa tangentialen Strömungsrichtung im Abflußkanal einen stumpfen Winkel einschließt. Durch diese Führung des Zu- und Abflusses des Kühlmittels wird auf der Hochdruckseite durch den vom Trennsteg weggerichteten Volumenstrom der Druck am Trennsteg vermindert. Auf der Niederdruchseite wird der Druck am Trennsteg durch den Staudruck des nach oben ausfließenden Kühlmittels erhöht. Insgesamt ergibt sich dadurch einerseits eine Verringerung des Gesamtdruckes über den Trennsteg hinweg, so daß nur äußerst geringe Leckverluste auftreten, und andererseits eine strömungsgünstige Kühlmittelzu- und -abführung, was den Strömungswiderstand verringern hilft.

Gemäß einer vorteilhaften Ausführungsform der Erfindung sind die Leitstege, ein Ringsteg und der Trennsteg einstückig an dem Gehäuse angeformt, das mit Druck- oder Spritzgußtechnik gefertigt ist. Die Druck- oder Spritzform ist durch die fertigungstechnisch günstig gewählte Stegausbildung in axialer Richtung abziehbar. Der separat mit angeformtem Ringsteg gefertigte Mantel wird auf das so gefertigte Gehäuse aufgeschoben und der Ringraum durch zwei O-Ringe zwischen Gehäuse und Mantel im Bereich der Ringstege abgedichtet.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt eines Generators für Kraftfahrzeuge,
- Fig. 2: ausschnittweise eine perspektivische Ansicht des Generators in Richtung Pfeil II in Fig. 1,
- Fig. 3: eine Draufsicht des Generators in Fig. 1 mit abgezogenem Mantel in perspektivischer Darstellung,
- Fig. 4: eine Abwicklung des Gehäuses der Maschine in Fig. 1 - 3.

### Beschreibung des Ausführungsbeispiels

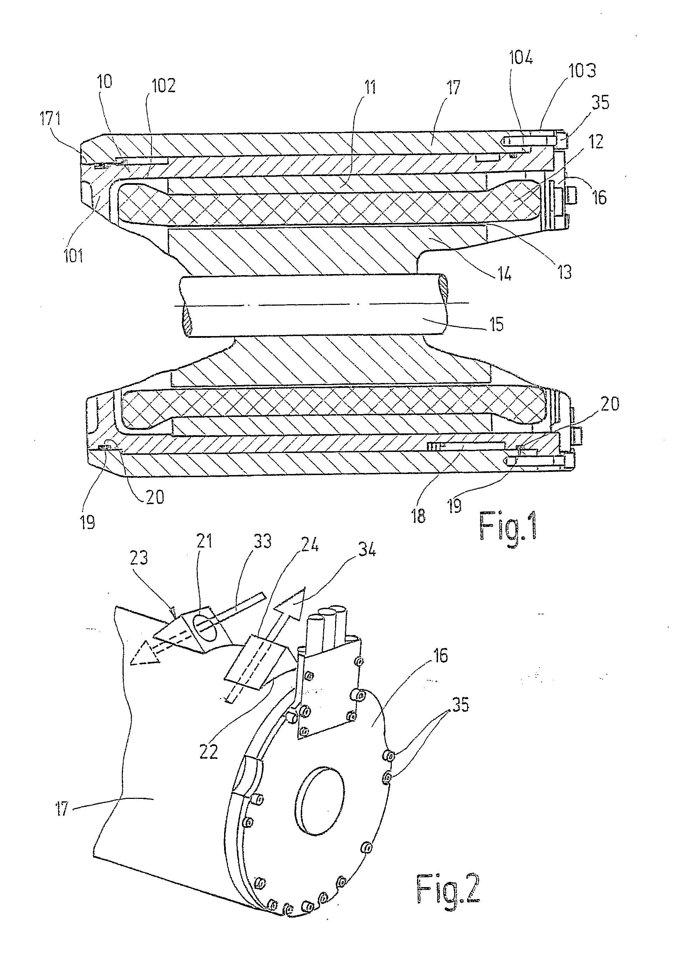

Der in Fig. 1 im Längsschnitt ausschnittweise dargestellte Generator für ein Kraftfahrzeug als Ausführungsbeispiel für eine allgemeine elektrische Maschine weist in bekannter Weise einen in einem Gehäuse 10 aufgenommenen Stator 11 mit Statorwicklung 12 und einen vom Stator 11 unter Belassung eines Luftspalts 13 konzentrisch umschlossenen Rotor 14 auf, der drehfest auf einer im Gehäuse 10 drehbar gelagerten Rotorwelle 15 sitzt. Das Gehäuse 10 ist topfförmig mit einem Bodenteil 101 und einem Zylinderteil 102 ausgeführt. Am Zylinderteil 102 ist an dem vom Bodenteil 101 abgekehrten Ende ein radialer Flansch 103 einstückig ausgebildet, auf dem ein das Gehäuse 10 stirnseitig abschließender Lagerdeckel 16 befestigt ist. Die Rotorwelle 15 ist - wie in Fig. 1 nicht gezeigt ist - jeweils in einem im Bodenteil 101 und im Lagerdeckel 16 integrierten Drehlager aufgenommen.

Unmittelbar dem Flansch 103 benachbart ist ein radial von der Oberfläche des Zylinderteils 102 abstehender Ringsteg 104 angeformt. Vom anderen Ende des Zylinderteils 102 her ist auf das Gehäuse 10 ein separat gefertigter, hohlzylindrischer Mantel 17 aufgeschoben, der mit seinem in Einschubrichtung vorderen Ende einerseits den Ringsteg 104 übergreift und andererseits an dem Flansch 103 anliegt. Am hinteren Ende des Mantels 17 ist ein nach innen radial vorspringender Ringsteg 171 einstückig ausgebildet, dessen radiale Höhe der radialen Höhe des Ringstegs 104 am Gehäuse 10 entspricht. Auf diese Weise wird zwischen dem Mantel 17 und dem Zylinderteil 102 des Gehäuses 10 ein Ringraum 18 begrenzt, der stirnseitig von den beiden Ringstegen 104 und 171 abgeschlossen ist. Im Bereich der Ringstege 104 und 171 ist zwischen dem Mantel 17 und dem Zylinderteil 102 des Gehäuses 10 jeweils eine Ringdichtung 19 in Form eines O-Rings angeordnet, wobei vorzugsweise jeweils eine Ringdichtung 19 in einer in das Zylinderteil 102 des Gehäuse 10 eingestochenen Ringnut 20 einliegt. Der Ringraum 18 steht mit einem Kühlmittelzufluß 21 und einem Kühlmittelabfluß 22, denen jeweils ein außen am Mantel 17 angeordneter Zuflußstutzen 23 bzw. Abflußstutzen 24 zugeordnet ist in Verbindung (Fig. 2).

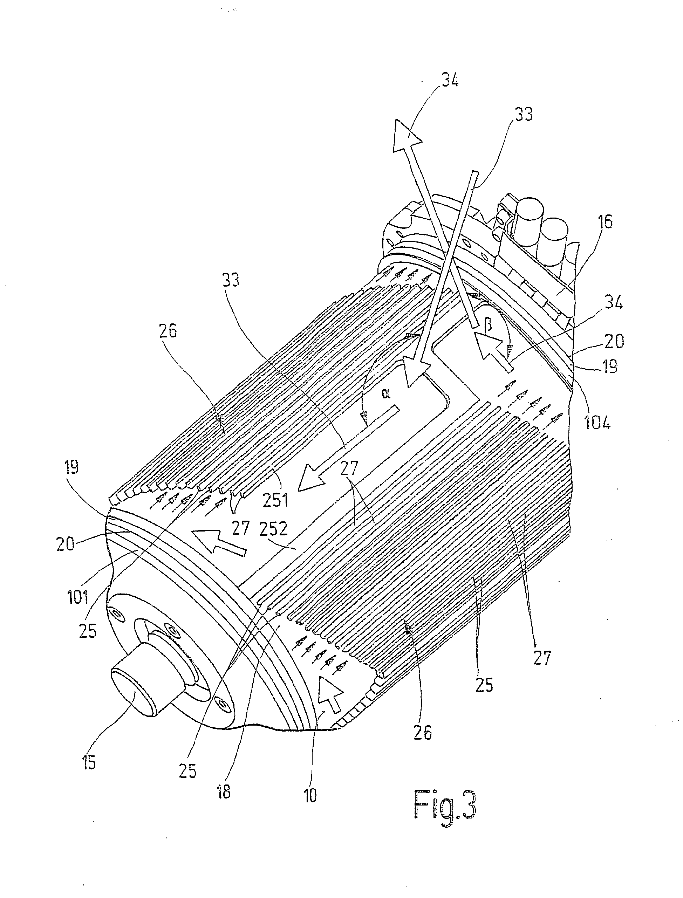

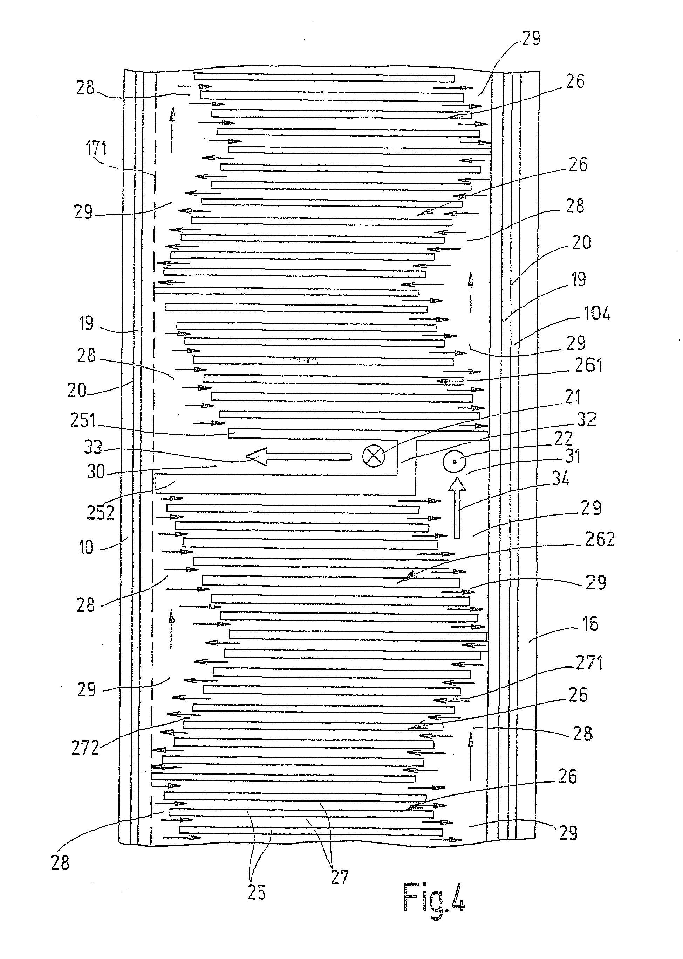

Zur Gewährleistung einer gleichmäßigen Umströmung des Gehäuses durch das Kühlmittel ist im Ringraum 18 eine Zwangsführung des Kühlmittels vom Kühlmittelzufluß 21 zum Kühlmittelabfluß 22 vorgenommen. Durch eine Vielzahl von axialen Leitstegen 25 ist dabei das Kühlmittel so zwangsgeführt, daß es den Ringraum 18 innerhalb von in Umfangsrichtung aneinandergereihten Segmenten des Ringraums 18, im folgenden Raumsegmente 26 genannt, axial breitbandig mit in aufeinanderfolgenden Raumsegmenten 26 gegensinniger Strömungsrichtung durchströmt. Die Leitstege 25 weisen eine der radialen Breite des Ringraum 18 entsprechende radiale Steghöhe auf und sind im Ausführungsbeispiel mit gleichem Querschnitt und gleicher axialer Länge parallel zueinander äqudistant angeordnet, wie dies in Fig. 3 und 4 zu sehen ist. In dem hier beschriebenen Ausführungsbeispiel sind die Leitstege 25 auf insgesamt fünf Raumsegmente 26 aufgeteilt, wobei die Zahl der Raumsegmente 26 jedoch beliebig gewählt werden kann. In jedem Raumsegment 26 bilden die Leitstege 25 zwischen sich eine Vielzahl von parallelen Strömungskanälen 27 mit einem Einströmende 271 und einem Ausströmende 272, die einen gleichen Strömungsquerschnitt besitzen. Alternativ können die Leitstege 25 auch so ausgebildet und angeordnet werden, z.B. mit unterschiedlich großen Abständen voneinander, daß die von ihnen eingeschlossenen Strömungskanäle 27 unterschiedliche Strömungsquerschnitte aufweisen. Die räumliche Zuordnung der unterschiedlichen Strömungsquerschnitte erfolgt dabei in Anpassung an lokal unterschiedlichen Wärmeeintrag in das Gehäuse 10. Innerhalb eines jeden Raumsegments 26 münden die Einströmenden 271 in einem Einströmsammelabschnitt 28 und die Ausströmenden 272 in einem Ausströmsammelabschnitt 29, so daß an jedem Ende der Strömungskanäle 27 sich in Umfangsrichtung jeweils an einen Ausströmsammelabschnitt 29 des einen Raumsegment 26 ein Einströmsammelabschnitt 28 des folgenden oder vorhergehenden Raumsegments 26 anschließt. In den insgesamt als Kühlmittelsammelabschnitte bezeichneten Einströmsammelabschnitten 28 und Ausströmsammelabschnitten 29 wird das Kühlmittel auf die einzelnen Strömungskanäle 27 im Raumsegment 26 verteilt bzw. das aus den Strömungskanälen 27 austretende Kühlmittel zusammengefaßt und in seiner Strömungsrichtung umgelenkt. Um Kurzschluß- oder Leckströme von dem Einströmsammelabschnitt 28 des einen Raumsegments 26 zu dem Ausströmsammelabschnitt 29 des in Strömungsrichtung folgenden Raumsegments 26 zu vermeiden, ist jeweils der Einströmsammelabschnitt 28 des einen Raumsegments 26 von dem Ausströmsammelabschnitt 29 des in Strömungsrichtung folgenden Raumsegments 26 separiert. Wie Fig. 3 und 4 zeigen, sind die Kühlmittelsammelabschnitte 28, 29 so ausgebildet, daß jeder Querschnitt der Einströmsammelabschnitte 28 sich in Strömungsrichtung verringert und jeder Querschnitt der Ausströmsammelabschnitt 29 sich in Strömungsrichtung vergrößert. Die Kühlmittelsammelabschnitte mit ihren in Strömungsrichtung sich verändernden Querschnitten werden dadurch realisiert, daß die innerhalb eines Raumsegments 26 in Umfangsrichtung aufeinanderfolgenden, parallelen Leitstege 25 axial um einen Betrag, vorzugsweise um jeweils denselben Betrag, in die gleiche Richtung gegeneinander verschoben sind. Dabei ist der in jedem Raumsegment 26 letzte Leitsteg 25 soweit verschoben, daß er mit einem seiner beiden Stegenden an einen der Ringstege 104 bzw. 171 anstößt und damit den Einströmsammelabschnitt 28 von dem Ausströmsammelabschnitt 29 des in Strömungsrichtung folgenden Raumsegments 26 trennt.

Wie in Fig. 3 und 4 zu sehen ist, sind zwischen dem ersten Leitsteg 251 des in Strömungsrichtung ersten Raumsegments 261 und dem letzten Leitsteg 252 des in Strömungsrichtung letzten Raumsegments 262 ein mit dem Kühlmittelzufluß 21 in Verbindung stehender Zuflußkanal 30, der sich in axialer Richtung erstreckt, und ein mit dem Kühlmittelabfluß 22 in Verbindung stehender Abflußkanal 31 ausgebildet, der sich in Umfangsrichtung erstreckt. Zuflußkanal 30 und Abflußkanal 31 sind durch einen in Umfangsrichtung von dem vorderen Ende des letzten Leitstegs 252 im letzten Raumsegment 262 bis zu dem ersten Leitsteg 251 im ersten Raumsegment 261 sich erstreckenden Trennsteg 32 voneinander getrennt. Um den am Trennsteg 32 herrschenden Gesamtdruck zu reduzieren und damit mögliche Leckverluste über den kleinen Spalt, der sich zwischen der Stegfläche des Trennstegs 32 und der Innenfläche des Mantels 17 bilden kann, zu vermeiden bzw. sehr klein zu halten, ist der Zuflußstutzen 23 so ausgebildet, daß dessen Achse mit der axialen Strömungsrichtung des Kühlmittels im Zuflußkanal 30 einen stumpfen Winkel α einschließt, wie dies in Fig. 3 durch die Zuflußströmungspfeile 33 symbolisiert ist (vgl. auch Fig. 2). Der Abflußkanal 31 ist dagegen so ausgebildet, daß dessen Achse etwa tangential zum Gehäuse 10, bzw. in dessen Umfangsrichtung, verläuft und mit der Strömungsrichtung im Abflußkanal 31 ebenfalls einen stumpfen Winkel β einschließt, wie dies in Fig. 3 durch die Abflußströmungspfeile 34 symbolisiert ist (vgl. auch Fig. 2).

Die Anordnung der Leitstege 25 und die zwischen den Leitstegen 25 gebildeten Strömungskanäle 27 sind in der in Fig. 4 dargestellten Abwinklung des Gehäuses 10 sehr gut zu sehen. Die Strömung des Kühlmittels in den einzelnen Strömungskanälen 27 und in den Kühlmiittelsammenabschnitten an den Strömungsenden 271 und 272 der Strömungskanäle 27 ist durch die in Fig. 4 eingezeichneten Strömungspfeile symbolisiert.

Das Gehäuse 10 mit den parallelen Leitstegen 25, dem Trennsteg 32 und dem Ringsteg 104 wird vorteilhaft im Druck-oder Spritzgußverfahren gefertigt. Die Druck- oder Spritzform ist dann aufgrund der konstruktiven Ausbildung des Gehäuses 10 axial abziehbar, und der separat gefertigte Mantel 17 ist nach Komplettierung des Generators soweit auf das Gehäuse 10 aufschiebbar, bis das in Einschubrichtung vordere Stirnende des Mantels 17 an dem am Zylinderteil 102 des Gehäuses 10 ausgebildeten Flansch 103 anschlägt. Mittels Befestigungsschrauben 35, die durch den Flansch 103 hindurch in die Stirnseite des Mantels 17 eingeschraubt werden, werden Gehäuse 10 und Mantel 17 zusammengehalten. Die Schrauben 35 legen auch gleichzeitig den Lagerdeckel 16 am Flansch 103 fest (Fig. 1 und 2.).

## Patentansprüche

1. Elektrische Maschine, insbesondere Generator für Kraftfahrzeuge, mit einem Gehäuse (10) und einem das Gehäuse (10) konzentrisch umschließenden Mantel (17), der mit dem Gehäuse (10) einen mit einem Kühlmittelzufluss (21) und einem Kühlmittelabfluss (22) in Verbindung stehenden, flüssigkeitsdicht abgeschlossenen Ringraum (18) begrenzt, wobei im Ringraum (18) eine Vielzahl von axialen Leitstegen (25) so angeordnet ist, dass das Kühlmittel den Ringraum (18) innerhalb von in Umfangsrichtung aneinandergereihten Raumsegmenten (26) axial breitbandig mit in aufeinanderfolgenden Raumsegmenten (26) gegensinniger Strömungsrichtung zwangsdurchströmt, **dadurch gekennzeichnet, dass** in jedem Raumsegment (26) die Leitstege (25) eine Vielzahl von parallelen Strömungskanälen, (27) mit jeweils einem Ein-und Ausströmende (271, 272) bilden, dass im Ringraum (18) an jedem Ende der Strömungskanäle (27) in Umfangsrichtung sich erstreckende Kühlmittel-sammelabschnitte ausgebildet sind, von denen sich jeweils ein Einströmsammel-abschnitt (28) über die Einströmenenden (271) und ein Ausströmsammelabschnitt (29) über die Ausströmenden (272) der Strömungskanäle (27) eines jeden Raumsegments (26) erstreckt, dass an jedem Ende der Strömungskanäle (27) sich in Umfangsrichtung an den Ausströmsammelabschnitt (29) des einen Raumsegments (26) ein Einströmsammelabschnitt (28) des folgenden Raumsegments (26) anschliesst und dass jeder Einströmsammelabschnitt (28) von dem Ausströmsammelabschnitt (29) des in Strömungsrichtung folgenden Raumsegments (26) separiert ist, und dass die Kühlmittelsammelabschnitte so ausgebildet sind, dass der Querschnitt der Einströmsammelabschnitte (28) sich in Strömungsrichtung verjüngt und der Querschnitt der Ausströmsammelabschnitte (29) in Strömungsrichtung zunimmt.

2. Maschine nach Anspruch 1, **dadurch gekennzeichnet, dass** die Leitstege (25) eine der radialen Breite des Ringraums (18) entsprechende, radiale Steghöhe aufweisen.

3. Maschine nach Anspruch 1, **dadurch gekennzeichnet, dass** die Querschnitte der zwischen den Leitstegen (25) gebildeten Strömungskanäle (27) gleich groß sind.

4. Maschine nach Anspruch 1, **dadurch gekennzeichnete dass** die Querschnitte der zwischen den Leitstegen (25) gebildeten Strömungskanäle (27) in Anpassung an lokal unterschiedlich vorzunehmende Wärmeableitung unterschiedlich groß dimensioniert sind.

5. Maschine nach einem der Ansprüche 1-4, **dadurch gekennzeichnet, dass** die Kühlmittelsammelabschnitte an den Enden der Strömungskanäle (27) dadurch gebildet sind, dass die Leitstege (25) gleiche Länge aufweisen und innerhalb eines Raumsegments (26) in Umfangsrichtung aufeinanderfolgende Leitstege (25) axial, um vorzugsweise gleiche Beträge, in die gleiche Richtung gegeneinander verschoben sind.

6. Maschinen nach Anspruch 5, **dadurch gekennzeichnet, dass** der im Raumsegment (26) letzte Leitsteg (25) mit einem Stegende bis an einen von zwei den Ringraum (18) stirnseitig abschließenden Ringstegen (104, 171) herangeführt ist.

7. Maschine nach einem der Ansprüche 1-6, **dadurch gekennzeichnet, dass** zwischen dem ersten Leitsteg (251) des in Strömungsrichtung ersten Raumsegments (261) und dem letzten Leitsteg (252) des letzten Raumsegments (262) ein mit dem Kühlmittelzufluss (21) in Verbindung stehender, in axiale Richtung sich erstreckender Zuflusskanal (30) und ein mit dem Kühlmittelabfluss (22) in Verbindung stehender, in Umfangsrichtung sich erstreckender Abflusskanal (31) ausgebildet sind und dass Zu-und Abflusskanal (30,31) durch einen in Uinfangsrichtung von dem letzten Leitsteg (252) im letzten Raumsegment (262) bis zu dem ersten Leitsteg (251) im ersten Raumsegment (261) sich erstreckenden Trennsteg (32) voneinander getrennt sind.

8. Maschine nach Anspruch 7, **dadurch gekennzeichnet, dass** der Kühlmittelzufluss (21) einen auf den Mantel (17) aufgesetzten Zuflussstutzen (23) aufweist, dessen Achse mit der axialen Strömungrichtung des Kühlmittels im Zuflusskanal (30) einen stumpfen Winkel (α) einschliesst.

9. Maschine nach Anspruch 7 oder 8, **dadurch gekennzeichnet, dass** der Kühlmittelabfluss (22) einen auf den Mantel (17) aufgesetzten Abflussstutzen (31) aufweist, dessen Achse mit der in Umfangsrichtung des Gehäuses (10) weisenden Strömungsrichtung im Abflusskanal (31) eine stumpfen Winkel (β) einschliesst.

10. Maschine nach einem der Ansprüche 6-9, **dadurch gekennzeichnet, dass** die Leitstege (25), der Trennsteg (32) und einer der Ringstege (104) an dem Gehäuse (10) einstückig angeformt sind.

11. Maschine nach einem der Ansprüche 6-10, **dadurch gekennzeichnet, dass** der Mantel (17) als separates Bauteil gefertigt ist, an dem der andere Ringsteg (171) einstückig angeformt ist, dass das Gehäuse (10) in den Mantel (17) eingeschoben ist und dass zwischen Gehäuse (10) und Mantel (17) im Bereich der Ringstege (104, 171) eine Richtdichtung (19) angeordnet ist.

12. Maschine nach Anspruch 11, **dadurch gekennzeichnet, dass** jede Ringdichtung (19) in einer in das Gehäuse (10) eingebrachten Ringnut (20) einliegt.

## Claims

1. Electric machine, particularly generator for motor vehicles, having a housing (10) and a casing (17) which concentrically surrounds the housing (10) and which bounds an annular space (18) which is closed off in a fluid-tight fashion and is connected to the housing (10) with a coolant inflow (21) and a coolant outflow (22), wherein a multiplicity of axial guide webs (25) are arranged in the annular space (18) in such a way that the coolant is made to forcibly flow in an axially broadband fashion through the annular space (18) within spatial segments (26) arranged one next to the other in the circumferential direction, with a directional flow which is opposed in successive spatial segments (26), **characterized in that** in each spatial segment (26) the guide webs (25) form a multiplicity of parallel flow ducts (27) each with an inflow (271) and outflow (272) end, **in that** coolant collecting sections which extend in the circumferential direction at each end of the flow duct (27) are formed in the annular space (18), from each of which coolant collecting sections an inflow collecting section (28) extends over the inflow ends (271), and an outflow collecting section (29) extends over the outflow ends (272), of the flow ducts (27) of each spatial segment (26), **in that** at each end of the flow ducts (27) an inflow collecting section (28) of the following spatial segment (26) adjoins, in the circumferential direction, the outflow collecting section (29) of the one spatial segment (26), and **in that** each inflow collecting section (28) is separated from the outflow collecting section (29) of the spatial segment (26) which follows in the direction of flow, and **in that** the coolant collecting sections are embodied in such a way that the cross section of the inflow collecting section (28) tapers in the direction of flow and the cross section of the outflow collecting section (29) increases in the direction of flow.

2. Machine according to Claim 1, **characterized in that** the guide webs (25) have a radial web height corresponding to the radial width of the annular space (18).

3. Machine according to Claim 1, **characterized in that** the cross sections of the flow ducts (27) which are formed between the guide webs (25) are of equal size.

4. Machine according to Claim 1, **characterized in that** the cross sections of the flow ducts (27) which are formed between the guide webs (25) are dimensioned with different sizes in a way which is adapted to the conduction away of heat which is to be performed differently on a local basis.

5. Machine according to one of Claims 1-4, **characterized in that** the coolant collecting sections are formed at the ends of the flow ducts (27) **in that** the guide webs (25) are of equal length and successive guide webs (25) in the circumferential direction within a spatial segment (26) are shifted axially in the same direction with respect to one another by preferably equal amounts.

6. Machine according to Claim 5, **characterized in that** the guide web (25) which is the last in the spatial segment (26) is made to extend with one web end as far as one of two annular webs (104, 171) which adjoin the annular space (18) at the front side.

7. Machine according to one of Claims 1-6, **characterized in that** between the first guide web (251) of the first spatial segment (261) in the direction of flow and the last guide web (252) of the last spatial segment (262) an inflow duct (30) is formed which is connected to the coolant inflow (21) and extends in the axial direction, and an outflow duct (21) is formed which is connected to the coolant outflow (22) and extends in the circumferential direction, and **in that** the inflow and outflow ducts (30, 31) are separated from one another by a dividing web (32) which extends in the circumferential direction from the last guide web (252) in the last spatial segment (262) as far as the first guide web (251) in the first spatial segment (261).

8. Machine according to Claim 7, **characterized in that** the coolant inflow (21) has an inflow connector (23) which is fitted onto the casing (17) and whose axis includes an obtuse angle (α) with the axial direction of flow of the coolant in the inflow duct (30).

9. Machine according to Claim 7 or 8, **characterized in that** the coolant outflow (22) has an outflow connector (31) which is fitted onto the casing (17) and whose axis includes an obtuse angle (β) with the direction of flow in the outflow duct (31), said direction of flow pointing in the circumferential direction of the housing (10).

10. Machine according to one of Claims 6-9, **characterized in that** the guide webs (25), the dividing web (32) and one of the annular webs (104) are integrally formed onto the housing (10).

11. Machine according to one of Claims 6-10, **characterized in that** the casing (17) is fabricated as a separate component on which the other annular web (171) is integrally formed, **in that** the housing (10) is fitted into the casing (17), and **in that** an annular seal (19) is arranged in the region of the annular webs (104, 171), between the housing (10) and the casing (17).

12. Machine according to Claim 11, **characterized in that** each annular seal (19) is located in an annular groove (20) which is made in the housing (10).

## Revendications

1. Machine électrique, notamment génératrice pour véhicules automobiles, comprenant un boîtier (10) et une enceinte (17) entourant concentriquement le boîtier (10), laquelle délimite avec le boîtier (10) un espace annulaire (18) fermé de manière étanche aux liquides, en liaison avec une entrée de réfrigérant (21) et une sortie de réfrigérant (22), une pluralité de nervures de guidage axiales (25) étant disposées dans l'espace annulaire (18) de telle sorte que le réfrigérant traverse de manière forcée l'espace annulaire (18) à l'intérieur de segments de l'espace (26) disposés en rangées les uns contre les autres dans la direction périphérique axialement en bande large avec des segments de l'espace successifs (26) de sens d'écoulement opposé, **caractérisée en ce que** dans chaque segment de l'espace (26) les nervures de guidage (25) forment une pluralité de canaux d'écoulement parallèles (27) avec respectivement une extrémité d'afflux et une extrémité de sortie (271, 272), **en ce que** dans l'espace annulaire (18) au niveau de chaque extrémité des canaux d'écoulement (27) sont réalisées des portions collectrices de réfrigérant s'étendant dans la direction périphérique, dont à chaque fois une portion collectrice d'afflux (28) s'étend sur les extrémités d'afflux (271) et une portion collectrice de sortie (29) s'étend sur les extrémités de sortie (272) des canaux d'écoulement (27) de chaque segment de l'espace (26), **en ce qu'**au niveau de chaque extrémité des canaux d'écoulement (27) se raccorde, dans la direction périphérique, à la portion collectrice de sortie (29) d'un des segments de l'espace (26), une portion collectrice d'afflux (28) du segment de l'espace suivant (26) et **en ce que** chaque portion collectrice d'afflux (28) est séparée de la portion collectrice de sortie (29) du segment de l'espace suivant (26) dans la direction d'écoulement et **en ce que** les portions collectrices de réfrigérant sont réalisées de telle sorte que la section transversale des portions collectrices d'afflux (28) se rétrécisse dans la direction d'écoulement et que la section transversale des portions collectrices de sortie (29) augmente dans la direction d'écoulement.

2. Machine selon la revendication 1, **caractérisée en ce que** les nervures de guidage (25) présentent une hauteur de nervure radiale correspondant à la largeur radiale de l'espace annulaire (18).

3. Machine selon la revendication 1, **caractérisée en ce que** les sections transversales des canaux d'écoulement (27) formés entre les nervures de guidage (25) sont identiques.

4. Machine selon la revendication 1, **caractérisée en ce que** les sections transversales des canaux d'écoulement (27) formés entre les nervures de guidage (25) sont dimensionnées avec des dimensions différentes de manière adaptée à la dissipation thermique devant être réalisée localement de manière différente.

5. Machine selon l'une quelconque des revendications 1 à 4, **caractérisée en ce que** les portions collectrices de réfrigérant sont formées aux extrémités des canaux d'écoulement (27) par le fait que les nervures de guidage (25) présentent la même longueur et des nervures de guidage (25) successives dans la direction périphérique à l'intérieur d'un segment de l'espace (26) sont déplacées axialement de préférence de la même distance les unes par rapport aux autres dans la même direction.

6. Machine selon la revendication 5, **caractérisée en ce que** la dernière nervure de guidage (25) dans le segment de l'espace (26) est avancée avec une extrémité de nervure jusqu'à l'une de deux nervures annulaires (104, 171) terminant l'espace annulaire (18) du côté frontal.

7. Machine selon l'une quelconque des revendications 1 à 6, **caractérisée en ce qu'**entre la première nervure de guidage (251) du premier segment de l'espace (261) dans la direction d'écoulement et la dernière nervure de guidage (252) du dernier segment de l'espace (262) sont réalisés un canal d'entrée (30) s'étendant dans la direction axiale, en liaison avec l'entrée de réfrigérant (21) et un canal de sortie (31) s'étendant dans la direction périphérique, en liaison avec la sortie de réfrigérant (22) et **en ce que** le canal d'entrée et le canal de sortie (30, 31) sont séparés l'un de l'autre par une nervure de séparation (32) s'étendant dans la direction périphérique depuis la dernière nervure de guidage (252) dans le dernier segment de l'espace (262) jusqu'à la première nervure de guidage (251) dans le premier segment de l'espace (261).

8. Machine selon la revendication 7, **caractérisée en ce que** l'entrée de réfrigérant (21) présente une tubulure d'entrée (23) placée sur l'enceinte (17), dont l'axe forme avec la direction d'écoulement axiale du réfrigérant dans le canal d'entrée (30) un angle obtus (α).

9. Machine selon la revendication 7 ou 8, **caractérisée en ce que** la sortie de réfrigérant (22) présente une tubulure de sortie (31) placée sur l'enceinte (17), dont l'axe forme avec la direction d'écoulement orientée dans la direction périphérique du boîtier (10), dans le canal de sortie (31), un angle obtus (β).

10. Machine selon l'une quelconque des revendications 6 à 9, **caractérisée en ce que** les nervures de guidage (25), la nervure de séparation (32) et l'une des nervures annulaires (104) sont façonnées d'une seule pièce sur le boîtier (10).

11. Machine selon l'une quelconque des revendications 6 à 10, **caractérisée en ce que** l'enceinte (17) est fabriquée sous forme de composant séparé, sur lequel l'autre nervure annulaire (171) est façonnée d'une seule pièce, **en ce que** le boîtier (10) est enfoncé dans l'enceinte (17) et **en ce qu'**entre le boîtier (10) et l'enceinte (17), dans la région des nervures annulaires (104, 171), est disposé un joint d'étanchéité annulaire (19).

12. Machine selon la revendication 11, **caractérisée en ce que** chaque joint d'étanchéité annulaire (19) s'insère dans une rainure annulaire (20) pratiquée dans le boîtier (10).
